(19) Europäisches Patentamt
European Patent Office
Office européen des brevets

(11) EP 0 797 629 B1

(12) FASCICULE DE BREVET EUROPEEN

(45) Date de publication et mention de la délivrance du brevet:
**02.04.2003 Bulletin 2003/14**

(21) Numéro de dépôt: **96934911.7**

(22) Date de dépôt: **15.10.1996**

(51) Int Cl.⁷: **C08L 95/00**, C08K 3/24, C08K 3/06
// (C08L95/00, 53:02), (C08L95/00, 9:06)

(86) Numéro de dépôt international:
**PCT/FR96/01605**

(87) Numéro de publication internationale:
**WO 97/014753 (24.04.1997 Gazette 1997/18)**

# (54) PROCEDE DE PREPARATION DE COMPOSITIONS BITUME/POLYMERE A CARACTERE MULTIGRADE RENFORCE ET APPLICATION DES COMPOSITIONS OBTENUES A LA PRODUCTION DE LIANTS BITUME/POLYMERE POUR REVETEMENTS

VERFAHREN ZUR HERSTELLUNG VON BITUMEN-POLYMER-ZUSAMMENSETZUNGEN, IHRE VERWENDUNG ALS BINDEMITTEL FÜR BESCHICHTUNGEN

METHOD FOR PREPARING REINFORCED MULTIGRADE BITUMEN/POLYMER COMPOSITIONS, AND USE OF THE RESULTING COMPOSITIONS FOR PRODUCING BITUMEN/POLYMER BINDERS FOR SURFACE COATINGS

(84) Etats contractants désignés:
**AT BE CH DE DK ES FI FR GB GR IE IT LI LU MC NL PT SE**

(30) Priorité: **16.10.1995 FR 9512086**

(43) Date de publication de la demande:
**01.10.1997 Bulletin 1997/40**

(73) Titulaire: **ELF ANTAR FRANCE**
**92400 Courbevoie (FR)**

(72) Inventeurs:
- **PLANCHE, Jean-Pascal**
  **F-38540 Saint-Just-Chaleyssin (FR)**
- **TURELLO, Patrick**
  **F-69340 Francheville (FR)**

(74) Mandataire: **Jolly, Jean-Pierre**
**Cabinet Jolly**
**54, rue de Clichy**
**75009 Paris (FR)**

(56) Documents cités:
**EP-A- 0 096 638**
**EP-A- 0 157 210**
**WO-A-94/22958**
**DE-A- 2 255 173**
**FR-A- 2 528 439**
**FR-A- 2 703 064**
**US-A- 5 070 123**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 797 629 B1

## Description

L'invention a trait à un procédé de préparation de compositions bitume/polymère à caractère multigrade renforcé. Elle concerne encore l'application des compositions obtenues à la production de liants bitume/polymère pour revêtements et notamment pour revêtements routiers ou pour revêtements d'étanchéité.

Par compositions bitume/polymère à caractère multigrade renforcé, on entend, selon l'invention, des compositions bitume/polymère qui présentent un large intervalle de plasticité. Ledit intervalle est défini comme la différence entre la température de ramollissement bille et anneau (en abrégé TBA), révélatrice des propriétés à chaud du liant ou composition bitume/polymère, et le point de fragilité Fraass, révélateur des propriétés à froid de la composition bitume/polymère. Le liant bitumineux consistant en/ou à base de la composition bitume/polymère résistera d'autant mieux aux sollicitations à chaud et à froid que l'intervalle de plasticité est plus large.

Les grandeurs température de ramollissement bille et anneau (TBA) et point de fragilité Fraass mentionnées plus haut sont déterminées par des procédures normalisées comme indiqué ci-après :

- température de ramollissement bille et anneau :

  déterminée selon la norme NF T 66 008 et exprimée en °C ;

- point de fragilité Fraass :

  déterminé selon la norme NF T 66026 et exprimé en °C.

Un procédé de préparation de compositions bitume/polymère à caractère multigrade renforcé est décrit dans la demande de brevet français N° 94 04577 du 18.04.1994 au nom de la demanderesse. Ce procédé consiste à mettre en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,5 % à 20 % et de préférence 0,7 % à 15 % d'un élastomère réticulable au soufre et un agent de couplage donneur de soufre en quantité propre à fournir une quantité de soufre libre représentant 0,1 % à 20 % et de préférence 0,5 % à 10 % du poids de l'élastomère réticulable au soufre dans le milieu réactionnel formé des ingrédients bitume ou mélange de bitumes, élastomère et agent de couplage, pour produire une composition réticulée au soufre, puis à incorporer au milieu réactionnel résultant de la vulcanisation au soufre, maintenu à une température comprise entre 100°C et 230°C et sous agitation, 0,005 % à 5 % et de préférence 0,01 % à 2,5 %, en poids du bitume, d'un adjuvant acide consistant en au moins un composé choisi dans le groupe formé par les acides phosphoriques, les acides boriques, l'acide sulfurique, les anhydrides desdits acides et l'acide chlorosulfurique et à maintenir le milieu réactionnel renfermant l'adjuvant acide à la température comprise entre 100°C et 230°C et sous agitation pendant une durée d'au moins 20 minutes. L'adjuvant acide, que l'on utilise dans le procédé de la demande de brevet français N° 94 04577 peut consister en particulier en un ou plusieurs des composés choisis parmi $H_3PO_4$, $P_2O_5$,$H_3BO_3$, $B_2O_3$, $H_2SO_4$, $SO_3$ et $HSO_3Cl$.

En poursuivant ses recherches, la demanderesse a mis en évidence que le procédé de la demande de brevet précitée pouvait être encore efficacement mis en oeuvre et même conduire à des performances améliorées en utilisant, à titre d'adjuvant acide, des composantes acides spécifiques non divulguées dans ladite demande de brevet.

L'invention a donc pour objet un procédé de préparation de compositions bitume/polymère à caractère multigrade renforcé,du type dans lequel on met en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,5 % à 20 % et de préférence 0,7 % à 15 % d'un élastomère réticulable au soufre et un agent de couplage donneur de soufre en quantité propre à fournir une quantité de soufre libre représentant 0,1 % à 20 % et de préférence 0,5 à 10 % du poids de l'élastomère réticulable au soufre dans le milieu réactionnel formé des ingrédients bitume ou mélange de bitumes, élastomère et agent de couplage, pour produire une composition réticulée au soufre, puis on incorpore 0,005 % à 5 % et de préférence 0,01 % à 2,5 %, en poids du bitume ou mélange de bitumes, d'un adjuvant acide au milieu réactionnel résultant de la réticulation au soufre et maintenu à une température comprise entre 100°C et 230°C et sous agitation et l'on maintient le milieu réactionnel renfermant l'adjuvant acide à la température comprise entre 100°C et 230°C et sous agitation pendant une durée d'au moins 10 minutes, ledit procédé se caractérisant en ce que l'adjuvant acide est choisi parmi les acides polyphosphoriques, les acides de formule $R-(COO)_t-SO_3H$, où t est zéro ou un et R est un radical hydrocarbyle en $C_1$ à $C_{12}$, les mélanges d'au moins un acide polyphosphorique et d'acide sulfurique, les mélanges d'au moins un acide polyphosphorique et d'au moins l'un desdits acides $R-(COO)_t-SO_3H$, les mélanges d'acide sulfurique et d'au moins l'un des acides $R-(COO)_t-SO_3H$ et les mélanges d'acide sulfurique avec au moins un acide polyphosphorique et au moins l'un des acides $R-(COO)_t-SO_3H$.

Avantageusement, l'adjuvant acide consiste en une association renfermant, en poids, 5 % à 100 % et plus

particulièrement 20 % à 100 % d'un ou plusieurs acides polyphosphoriques et 95 % à 0 % et plus particulièrement 80 % à 0 % d'au moins un composé choisi dans le groupe formé de l'acide sulfurique et desdits acides $R-(COO)_t-SO_3H$. Tout spécialement l'adjuvant acide consiste en une association constituée, en poids, de 20 % à 95 % et plus particulièrement de 40 % à 90 % d'un ou plusieurs acides polyphosphoriques et de 80 % à 5 % et plus particulièrement de 60 % à 10 % d'acide sulfurique et/ou d'acide méthane sulfonique.

Lorsque l'adjuvant acide est constitué d'une pluralité de composés acides, par exemple association d'un acide polyphosphorique et d'acide sulfurique, lesdits composés peuvent être incorporés soit en mélange soit successivement, au milieu réactionnel résultant de la réticulation au soufre.

Les acides polyphosphoriques, utilisables dans le procédé selon l'invention, sont des composés de formule brute $P_qH_rO_s$ dans laquelle q, r et s sont des nombres positifs tels que $q \geq 2$ et notamment allant de 3 à 20 ou plus et que 5q+r-2s=0.

En particulier, lesdits acides polyphosphoriques peuvent être des composés linéaires de formule brute $P_qH_{q+2}O_{3q+1}$ correspondant à la formule développée

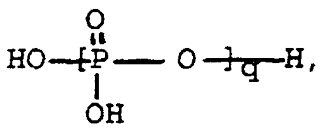

où q a la signification donnée ci-dessus ou encore être des produits de structure bidimensionnelle voire même tridimensionnelle. Tous ces acides polyphosphoriques peuvent être considérés comme des produits de polycondenstion par chauffage de l'acide métaphosphorique aqueux.

Les acides de formule $R-(COO)_t-SO_3H$ sont soit des acides sulfoniques de formule $R-SO_3H$, lorsque t=0, ou bien des acides de formule $R-COO-SO_3H$, lorsque t=1. Les acides de formule $R-COO-SO_3H$ peuvent être considérés comme des adduits (adducts) d'acides monocarboxyliques R-COOH et de $SO_3$ ou encore comme des anhydrides mixtes d'acides monocarboxyliques de formule R-COOH et d'acide sulfurique. Dans ces acides de formule $R-(COO)_t-SO_3H$, le radical R est un radical hydrocarbyle en $C_1$ à $C_{12}$ et plus spécialement en $C_1$ à $C_8$. Ledit radical R peut consister notamment en un radical alkyle linéaire ou ramifié en $C_1$ à $C_{12}$ et plus spécialement en $C_1$ à $C_8$, notamment méthyle, éthyle, propyle, butyle, hexyle, octyle, un radical cycloalkyle en $C_4$ à $C_{12}$ et plus particulièrement en $C_6$ à $C_8$ ou encore un radical aromatique monovalent en $C_6$ à $C_{12}$ et plus spécialement en $C_6$ à $C_8$, notamment phényle, tolyle pour le radical aromatique et cyclohexyle, cyclopentyle ou cycloheptyle pour le radical cycloalkyle. Des exemples d'acides sulfoniques de formule $R-SO_3H$ utilisables dans le procédé selon l'invention sont tels que l'acide méthane sulfonique, l'acide éthane sulfonique, l'acide propane sulfonique, l'acide benzène sulfonique et l'acide toluène sulfonique et tout spécialement l'acide méthane sulfonique et l'acide éthane sulfonique. Comme acides de formule $R-COO-SO_3H$, on peut mentionner les acides $CH_3-COO-SO_3H$ et $CH_3-CH_2-COOSO_3H$, qui sont des adduits de $SO_3$ avec respectivement l'acide acétique et l'acide propionique.

Le bitume ou mélange de bitumes, que l'on utilise pour la mise en oeuvre du procédé selon l'invention, est choisi avantageusement parmi les divers bitumes qui possèdent une viscosité cinématique à 100°C comprise entre $0,5x10^{-4}$ $m^2/s$ et $3x10^{-2}$ $m^2/s$ et de préférence entre $1x10^{-4}$ $m^2/s$ et $2x10^{-2}$ $m^2/s$. Ces bitumes peuvent être des bitumes de distillation directe ou de distillation sous pression réduite ou encore des bitumes soufflés ou semi-soufflés, des résidus de désasphaltage au propane ou au pentane, des résidus de viscoréduction, voire même certaines coupes pétrolières ou des mélanges de bitumes et de distillats sous vide ou encore des mélanges d'au moins deux des produits venant d'être énumérés. Avantageusement, le bitume ou mélange de bitumes utilisé dans le procédé selon l'invention, outre une viscosité cinématique comprise dans les intervalles précités, présente une pénétrabilité à 25°C, définie suivant la norme NF T 66004, comprise entre 5 et 800 et de préférence entre 10 et 400.

L'élastomère, que l'on emploie dans le procédé selon l'invention peut consister en un ou plusieurs polymères élastomériques tels que polyisoprène, polynorbornène, polybutadiène, caoutchouc butyle, copolymères statistiques éthylène/propylène (EP) terpolymères statistiques éthylène/propylène/diène (EPDM). Avantageusement, ledit élastomère est constitué en partie, la partie restante consistant en un ou plusieurs polymères tels que précités ou autres, ou en totalité d'un ou plusieurs copolymères statistiques ou séquencés de styrène et d'un diène conjugué tel que butadiène, isoprène, chloroprène, butadiène carboxylé, isoprène carboxylé, et plus particulièrement d'un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %. La masse moléculaire moyenne en poids du copolymère de styrène et de diène conjugué, et notamment celle des copolymères mentionnés cidessus, peut être comprise, par exemple, entre 10 000 et 600 000 daltons et se situe de préférence entre 30 000 et

400 000 daltons. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en poids situées dans les intervalles définis précédemment.

L'agent de couplage donneur de soufre, que l'on utilise dans la préparation des compositions bitume/polymère selon l'invention, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi les produits M, qui renferment, en poids, de 0 % à 100 % d'une composante A consistant en un ou plusieurs accélérateurs de vulcanisation donneurs de soufre et de 100 % à 0 % d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale

$$R_1 - (S)_m - (R_5 - (S)_m)_x - R_2,$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_1$ à $C_{20}$, saturé ou insaturé, formant un cycle avec les autres groupements d'atomes associés dans la formule, $R_5$ est un radical hydrocarboné divalent, saturé ou insaturé, en $C_1$ à $C_{20}$, les —(S)m— représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et x représente un nombre entier prenant les valeurs de zéro à 10. Des polysulfures préférés répondent à la formule $R_3 - (S)_p - R_3$, dans laquelle $R_3$ désigne un radical alkyle en $C_6$ à $C_{16}$, par exemple hexyle, octyle, dodécyle, tertiodocécyle, hexadécyle, nonyle, décyle, et $-(S)_p-$ représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule

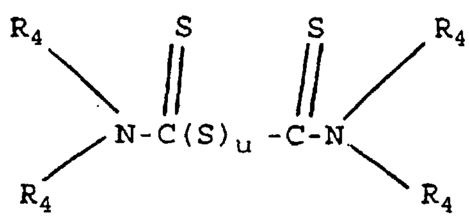

dans laquelle les $R_4$, identiques ou différents, représentent chacun un radical hydrocarboné en $C_1$ à $C_{12}$ et de préférence en $C_1$ à $C_8$, notamment radical alkyle, cycloalkyle ou aryle, ou bien deux radicaux $R_4$ fixés à un même atome d'azote sont reliés entre eux pour former un radical divalent hydrocarboné en $C_2$ à $C_8$ et u est un nombre allant de 2 à 8. Comme exemples de tels accélérateurs de vulcanisation, on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre, on peut encore citer les disulfures d'alkylphénols et les disulfures tels que disulfure de morpholine et N,N'-disulfure de caprolactame.

Les accélérateurs de vulcanisation non donneurs de soufre utilisables pour former la composante C des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule

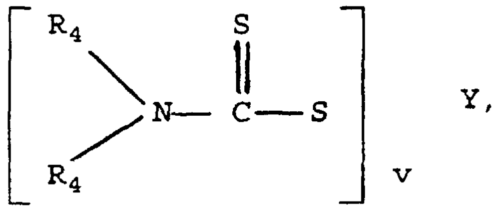

dans laquelle les $R_4$, identiques ou différents, ont la signification donnée plus haut, Y représente un métal et v désigne la valence de Y, et les monosulfures de thiurame de formule

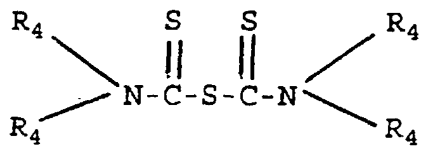

dans laquelle les $R_4$ ont la signification donnée plus haut.

Des exemples d'accélérateurs de vulcanisation du type des mercaptobenzothiazoles peuvent être tels que mercaptobenzothiazole, benzothiazole thiolate d'un métal tel que zinc, sodium, cuivre, disulfure de benzothiazyle, 2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, ce dernier composé pouvant être employé éventuellement en présence d'acides gras du type acide stéarique, acide laurique, acide éthylcaproique.

Pour plus de détails sur les accélérateurs de vulcanisation donneurs de soufre et non donneurs de soufre utilisables dans la constitution de l'agent de couplage, on peut se référer aux citations EP-A-0360656 et EP-A-0409683, dont le contenu est incorporé à la présente description par référence, de même que le contenu de la citation FR-A-2528439.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

Le procédé de préparation des compositions bitume/polymère selon l'invention est avantageusement mis en oeuvre en mettant tout d'abord en contact l'élastomère réticulable au soufre avec le bitume ou mélange de bitumes, en utilisant une proportion d'élastomère, par rapport au bitume ou mélange de bitumes, choisie comme défini précédemment pour cette proportion, en opérant à des températures comprises entre 100°C et 230°C, plus particulièrement entre 120°C et 190°C, et sous agitation, pendant une durée suffisante, généralement de l'ordre de quelques dizaines de minutes à quelques heures et par exemple de l'ordre de 1 heure à 8 heures, pour former un mélange homogène, puis en incorporant au dit mélange l'agent de couplage donneur de soufre en quantité appropriée choisie dans les intervalles définis plus haut pour ladite quantité et en maintenant le tout sous agitation à des températures comprises entre 100°C et 230°C, plus particulièrement entre 120°C et 190°C, et identiques ou non aux températures de mélange de l'élastomère avec le bitume ou mélange de bitumes, pendant une durée au moins égale à 10 minutes et généralement allant de 10 minutes à 5 heures, plus particulièrement de 30 minutes à 180 minutes, pour former un produit de réaction constituant la composition bitume/polymère réticulée, et enfin, au dit produit de réaction, maintenu à une température comprise entre 100°C et 230°C, plus particulièrement entre 120°C et 190°C, et sous agitation, on incorpore l'adjuvant acide en quantité désirée, choisie dans les intervalles définis précédemment pour ladite quantité, et l'on maintient le milieu réactionnel renfermant l'adjuvant acide à la température comprise entre 100°C et 230°C, plus particulièrement entre 120°C et 190°C, et sous agitation pendant une durée allant de 10 minutes à 5 heures, plus particulièrement de 30 minutes à 4 heures, pour former la composition bitume/polymère à intervalle de plasticité élargi.

Le mélange réactionnel formé du bitume ou mélange de bitumes, de l'élastomère réticulable au soufre et de l'agent de couplage donneur de soufre, qui conduit à la composition bitume/polymère réticulée que l'on soumet ensuite à l'action de l'adjuvant acide, peut être encore additionné de 1 % à 40 % et plus particulièrement de 2 % à 30 %, en poids du bitume, d'un agent fluxant, qui peut consister, notamment, en une huile hydrocarbonée présentant un intervalle de distillation à pression atmosphérique déterminé selon la norme ASTM D 86-67, compris entre 100°C et 600°C et situé plus spécialement entre 150°C et 400°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/polymère la contenant, de manière à retrouver les mêmes propriétés mécaniques qu'aurait présentées, après répandage à chaud, la composition bitume/polymère préparée sans utiliser d'agent fluxant. L'agent fluxant peut être ajouté au milieu réactionnel que l'on forme à partir du bitume, de l'élastomère réticulable au soufre et de l'agent de couplage donneur de soufre, à un moment quelconque de la constitution dudit milieu réactionnel, la quantité d'agent fluxant étant choisie, dans les intervalles définis plus haut, pour être compatible avec l'usage final désiré sur le chantier.

Au milieu réactionnel formé du bitume ou mélange de bitumes, de l'élastomère réticulable au soufre, de l'agent de couplage donneur de soufre et éventuellement de l'agent fluxant, qui sert à produire la composition bitume/polymère réticulée que l'on traite ensuite par l'adjuvant acide, on peut encore ajouter, à un moment quelconque de la constitution dudit milieu réactionnel, des additifs divers et notamment des composés azotés du type amine ou amide comme ceux définis dans la citation EP-A-0409683, à titre de promoteurs d'adhésion de la composition bitume/polymère finale aux surfaces minérales, lesdits composés azotés étant incorporés au dit milieu réactionnel, de préférence, avant l'addition de l'agent de couplage donneur de soufre à ce milieu réactionnel, de manière à ce que ces composés azotés soient greffés sur l'élastomère réticulé présent dans la composition bitume/polymère finale.

Le milieu constitué du bitume ou mélange de bitumes, de l'élastomère réticulable au soufre, de l'agent de couplage donneur de soufre et éventuellement de l'agent fluxant, à partir duquel on forme la composition bitume/polymère réticulée soumise ensuite à l'action de l'adjuvant acide, peut également renfermer, en poids du bitume ou mélange de bitumes, 0,1 % à 5 % et de préférence 0,2 % à 3 % d'un additif antigélifiant, ajouté audit milieu avantageusement avant l'incorporation de l'agent de couplage donneur de soufre, lequel additif antigélifiant répond à la formule $R_6$-X, dans laquelle $R_6$ est un radical hydrocarboné monovalent saturé ou insaturé en $C_2$ à $C_{50}$ et plus particulièrement en $C_2$ à $C_{40}$, par exemple radical alkyle, alkényle, alkylaryle, alkadiényle, alkatriényle ou encore radical du type polycyclique à cycles condensés, et X représente un groupement fonctionnel

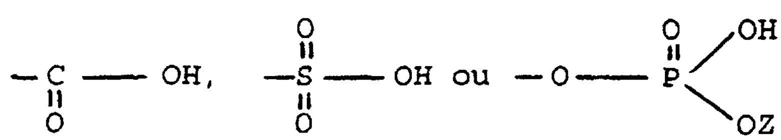

avec Z désignant un atome d'hydrogène ou un radical $R_6$. L'additif antigélifiant peut être choisi en particulier parmi les acides carboxyliques à chaîne grasse saturée ou insaturée, notamment acide pélargonique, acide laurique, acide stéarique, acide palmitique, acide oléique, les acides alkylarènesulfoniques portant une ou deux chaînes grasses saturées ou insaturées sur le noyau, notamment acide nonylbenzènesulfonique, acide dodécylbenzènesulfonique, acide didodécylbenzènesulfonique, les acides polycycliques à cycles condensés, notamment acide abiétique et acides résiniques en dérivant, les monohydrocarbylesters et dihydrocarbylesters de l'acide phosphorique encore appelés acides monohydrocarbylphosphoriques et dihydrocarbylphosphoriques, notamment acides monoalkylphosphoriques et acides dialkylphosphoriques pour lesquels le radical alkyle est en $C_2$ à $C_{18}$, par exemple éthyle, éthyl-2 hexyle, octyle, nonyle, décyle, dodécyle, hexadécyle, octadécyle, les mélanges d'acides carboxyliques à chaîne grasse et les mélanges d'acides abiétique ou résiniques et d'acides carboxyliques à chaîne grasse.

Dans une forme de mise en oeuvre du procédé selon l'invention utilisant une huile hydrocarbonée telle que définie plus haut, à titre d'agent fluxant, l'élastomère réticulable au soufre et l'agent de couplage donneur de soufre sont incorporés au bitume ou mélange de bitumes sous la forme d'une solution mère de ces produits dans l'huile

hydrocarbonée constituant l'agent fluxant.

La solution mère est préparée par mise en contact des ingrédients la composant, à savoir huile hydrocarbonée servant de solvant, élastomère et agent de couplage, sous agitation, à des températures comprises entre 10°C et 170°C et plus particulièrement entre 40°C et 120°C, pendant un temps suffisant, par exemple d'environ 30 minutes à environ 90 minutes, pour obtenir une dissolution complète de l'élastomère et de l'agent de couplage dans l'huile hydrocarbonée.

Les concentrations respectives de l'élastomère et de l'agent de couplage dans la solution mère peuvent varier assez largement en fonction notamment de la nature de l'huile hydrocarbonée utilisée pour dissoudre l'élastomère et l'agent de couplage. Ainsi, les quantités respectives d'élastomère et d'agent de couplage peuvent représenter avantageusement 5 % à 40 % et 0,02 % à 15 % du poids de l'huile hydrocarbonée. Une solution mère préférée renferme, comptés en poids de l'huile hydrocarbonée employée comme solvant, 10 % à 35 % d'élastomère et 0,1 % à 5 % d'agent de couplage.

Pour préparer les compositions bitume/polymère selon l'invention en produisant, par la technique de la solution mère, la composition bitume/polymère réticulée au soufre, que l'on soumet ensuite à l'action de l'adjuvant acide, on mélange la solution mère de l'élastomère et de l'agent de couplage avec le bitume ou mélange de bitumes, en opérant à une température comprise entre 100°C et 230°C et sous agitation, ceci étant effectué, par exemple, en ajoutant la solution mère au bitume ou mélange de bitumes maintenu sous agitation à la température entre 100°C et 230°C, puis on maintient le mélange résultant sous agitation à une température comprise entre 100°C et 230°C, par exemple à la température utilisée pour le mélange de la solution mère au bitume ou mélange de bitumes, pendant une durée au moins égale à 10 minutes, et généralement allant de 10 minutes à 90 minutes, pour former un produit de réaction constituant la composition bitume/polymère réticulée, et enfin, au dit produit de réaction, maintenu à une température comprise entre 100°C et 230°C, plus particulièrement entre 120°C et 190°C, et sous agitation, on incorpore l'adjuvant acide en quantité désirée, choisie dans les intervalles définis précédemment pour ladite quantité, et l'on maintient le milieu réactionnel renfermant l'adjuvant acide à la température comprise entre 100°C et 230°C, plus particulièrement entre 120°C et 190°C, et sous agitation pendant une durée allant de 10 minutes à 5 heures, plus particulièrement de 30 minutes à 4 heures, pour former la composition bitume/polymère à intervalle de plasticité élargi.

La quantité de solution mère mélangée au bitume ou mélange de bitumes est choisie pour fournir les quantités désirées, par rapport au bitume ou mélange de bitumes, d'élastomère et d'agent de couplage, lesdites quantités étant dans les fourchettes définies précédemment.

Une forme de mise en oeuvre particulièrement préférée pour la préparation, par la technique de la solution mère, de la composition bitume/polymère réticulée au soufre que l'on soumet ensuite à l'action de l'adjuvant acide, consiste à mettre en contact, à une température comprise entre 100°C et 230°C et sous agitation, de 80 % à 95 % en poids de bitume ou mélange de bitumes avec 20 % à 5 % en poids de la solution mère, cette dernière renfermant, en poids de l'huile hydrocarbonée servant de solvant, 10 % à 35 % d'élastomère et 0,1 % à 5 % d'agent de couplage, puis à maintenir le mélange ainsi obtenu sous agitation à une température comprise entre 100°C et 230°C, et de préférence à la température utilisée pour la mise en contact du bitume ou mélange de bitumes avec la solution mère, pendant une durée au moins égale à 10 minutes et de préférence allant de 10 minutes à 60 minutes.

Les compositions bitume/polymère à caractère multigrade renforcé, c'est-à-dire à intervalle de plasticité élargi, obtenues par le procédé selon l'invention peuvent être utilisées telles quelles ou bien diluées avec des proportions variables d'un bitume ou mélange de bitumes ou d'une composition selon l'invention ayant des caractéristiques différentes pour constituer des liants bitume/polymère ayant une teneur choisie en élastomère réticulé, qui peut être soit égale (composition non diluée) ou bien inférieure (composition diluée) à la teneur en élastomère réticulé des compositions bitume/polymère initiales correspondantes. -La dilution des compositions bitume/polymère selon l'invention avec le bitume ou mélange de bitumes ou avec une composition selon l'invention de caractéristiques différentes peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère selon l'invention peut être choisi parmi les bitumes définis précédemment comme convenant à la préparation des compositions bitume/polymère. Le cas échéant, le bitume ou mélange de bitumes utilisé pour la dilution peut avoir été lui-même préalablement traité par un adjuvant acide selon l'invention.

La dilution d'une composition bitume/polymère selon l'invention par un bitume ou mélange de bitumes ou par une seconde composition selon l'invention à teneur plus faible en élastomère réticulé, pour former un liant bitume/polymère à teneur désirée en élastomère réticulé, inférieure à celle de la composition bitume/polymère à diluer, est généralement réalisée en mettant en contact, sous agitation à des températures comprises entre 100°C et 230°C et plus particulièrement entre 120°C et 190°C, des proportions convenables de la composition bitume/polymère à diluer et de bitume ou mélange de bitumes ou de seconde composition bitume/polymère selon l'invention. Par exemple, la quantité de bitume ou mélange de bitumes ou de seconde composition bitume/polymère utilisée pour la dilution peut

être choisie pour que le liant bitume/polymère résultant de la dilution renferme une teneur en élastomère réticulé comprise entre 0,5 % et 5 %, plus particulièrement entre 0,7 % et 3 %, en poids du bitume et inférieure à la teneur en élastomère réticulé de la composition bitume/polymère selon l'invention soumise à la dilution.

Les liants bitume/polymère consistant en les compositions bitume/polymère selon l'invention ou résultant de la dilution desdites compositions par un bitume ou mélange de bitumes ou par une autre composition bitume/polymère selon l'invention, jusqu'à la teneur désirée en élastomère réticulé dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

En outre, les caractéristiques rhéologiques et mécaniques des bitumes ou des compositions bitume/polymère auxquelles on fait référence dans lesdits exemples sont les suivantes :

- pénétrabilité, exprimée en 1/10 de mm et déterminée selon la norme NF T 66004,
- température de ramollissement bille et anneau, exprimée en °C et déterminée par l'essai bille et anneau défini par la norme NF T 66008,
- caractéristiques rhéologiques en traction déterminées selon la norme NF T 46002 et comportant les grandeurs :

  . élongation à rupture $\varepsilon r$ en %,
  . contrainte à la rupture $\sigma r$ en daN/cm$^2$,

- indice de PFEIFFER (en abrégé IP) calculé par la relation $IP = \frac{20 - 500A}{1 + 50A}$ avec $A = \frac{\log_{10}800 - \log_{10}pen}{TBA - 25}$ où "pen" et "TBA" désignent respectivement la pénétrabilité et la température bille et anneau, telles que définies plus haut, cet indice fournissant une indication de la susceptibilité thermique de la composition.

<u>EXEMPLES 1 A 10</u> :

On préparait des compositions bitume/polymère témoins (exemples 1 , 2, 6 et 7) et des compositions bitume/polymère selon l'invention (exemples 3 à 5 et 8 à 10), pour en évaluer et comparer les caractéristiques physicomécaniques.

On opérait dans les conditions suivantes.

<u>Exemple 1 (témoin)</u> : Préparation d'une composition bitume/polymère réticulée au soufre et non traitée par l'adjuvant acide.

Dans un réacteur maintenu à 175°C et sous agitation, on introduisait 964 parties d'un bitume ayant une pénétrabilité, déterminée selon les modalités de la norme NF T 66004, de 82 et 35 parties d'un copolymère bloc de styrène et de butadiène ayant une masse moléculaire moyenne en poids égale à 100 000 daltons et renfermant 25 % de styrène. Après 2,5 heures de mélange sous agitation à 175°C, on obtenait une masse homogène.

A la masse homogène précitée, maintenue à 175°C, on ajoutait alors 1 partie de soufre cristallisé et on agitait encore l'ensemble à ladite température pendant 3 heures pour former une composition bitume/polymère réticulée.

<u>Exemple 2 (témoin)</u> : Préparation d'une composition bitume/polymère réticulée au soufre et traitée ensuite par $H_2SO_4$.

On préparait une composition bitume/polymère comme décrit dans l'exemple 1, et, une fois la réaction de réticulation par le soufre achevée, on ajoutait 10 parties d'acide sulfurique à 90 % au contenu du réacteur, puis maintenait le milieu réactionnel ainsi formé, à 175°C et sous agitation pendant une durée égale à 2 heures.

<u>Exemple 3 (selon l'invention)</u> : Préparation d'une composition bitume/polymère réticulée au soufre et traitée ensuite par un acide polyphosphorique.

On préparait une composition bitume/polymère comme décrit dans l'exemple 1, et, une fois la réaction de réticulation par le soufre achevée, on ajoutait 10 parties d'un acide polyphosphorique au contenu du réacteur, puis maintenait le milieu réactionnel ainsi formé, à 175°C et sous agitation pendant une durée égale à 2 heures. L'acide polyphosphorique utilisé répondait à la formule $P_nH_{n+2}O_{3n+1}$, n étant un nombre égal à environ 3.

<u>Exemple 4 (selon l'invention)</u> : Préparation d'une composition bitume/polymère réticulée au soufre et traitée ensuite par un acide polyphosphorique et $H_2SO_4$.

On opérait comme décrit dans l'exemple 3, en remplaçant toutefois les 10 parties d'acide polyphosphorique par 6 parties d'un mélange renfermant 85 % d'acide polyphosphorique et 15 % d'acide sulfurique, ledit mélange étant préformé avant d'être ajouté au contenu du réacteur.

<u>Exemple 5 (selon l'invention)</u> : Préparation d'une composition bitume/polymère réticulée au soufre et traitée ensuite par un acide polyphosphorique et $H_2SO_4$ ajoutés successivement.

On préparait une composition bitume/polymère comme décrit dans l'exemple 1, et, une fois la réaction de

réticulation par le soufre achevée, on ajoutait au contenu du réacteur 5 parties d'un acide polyphosphorique correspondant à celui utilisé dans l'exemple 3, puis 1 partie d'acide sulfurique à 90 %, et l'on maintenait le milieu réactionnel ainsi formé, à 175°C et sous agitation pendant 2 heures.

Exemples 6 à 10 : Préparation de compositions bitume/polymère diluées témoins et selon l'invention.

Les compositions bitume/polymère préparées comme décrit dans les exemples témoins 1 et 2 et les exemples 3 à 5 selon l'invention, étaient diluées avec le même bitume que celui défini dans l'exemple 1 jusqu'à une teneur finale de 1,5 % en polymère dans la composition diluée. L'opération de dilution était effectuée à 175°C et sous agitation et chaque composition diluée formée en fin d'addition du bitume de dilution était encore maintenue sous agitation à 175°C pendant une durée d'une heure pour parfaire son homogénéisation. Les compositions bitume/polymère diluées des exemples 6 à 10 étaient obtenues par dilution respectivement des compositions bitume/polymère selon les exemples 1 à 5.

Pour chacune des compositions bitume/polymère obtenues comme indiqué dans les exemples 1 à 10, on a déterminé les caractéristiques suivantes :

- pénétrabilité à 25°C (Pen. 25),
- température de ramollissement bille et anneau (TBA),
- point de Fraass (Fraass),
- indice de PFEIFFER (IPF),
- caractéristiques rhéologiques en traction, à savoir :
  - . contrainte à la rupture (σr)
  - . élongation à la rupture (εr)

Les résultats obtenus sont rassemblés dans le tableau suivant.

**TABLEAU**

| Exemples | Ordre d'introduction | Pen.25 (0,1mm) | TBA (°C) | Fraass (°C) | IPF | Traction à 20°C Vitesse = 500mm/min | | Traction à 5°C Vitesse = 500mm/min | |
|---|---|---|---|---|---|---|---|---|---|
| | | | | | | σ (r) | ε r (%) | σ (r) | ε r (%) |
| 1 | B + P + R | 68 | 56 | -24 | 1 | 0,98 | > 700 | 6,7 | > 700 |
| 2 | B + P + R + AS | 47 | 69 | -26 | 2,5 | 1,7 | > 700 | 7,5 | > 700 |
| 3 | B + P + R + AP | 48 | 68 | -25 | 2,4 | 1,6 | > 700 | 7,3 | > 700 |
| 4 | B + P + R + (AP+AS) | 55 | 69 | -30 | 2,9 | 1,8 | > 700 | 7,6 | > 700 |
| 5 | B + P + R + AP +AS | 54 | 71 | -32 | 3,2 | 1,9 | > 700 | | > 700 |
| 6 | B + P + R + B | 69 | 50 | -15 | - 0,4 | 0,24 | > 700 | 3,0 | > 700 |
| 7 | B + P + R+ AS + B | 65 | 55 | -22 | 0,6 | 0,6 | > 700 | 3,2 | > 700 |
| 8 | B + P + R + AP + B | 64 | 54 | -17 | 0,4 | 0,55 | > 700 | 3,1 | > 700 |
| 9 | B+P+R+(AP+AS)+B | 68 | 56 | - 25 | 1 | 0,7 | > 700 | 3,3 | > 700 |
| 10 | B+P+R+AP+AS+B | 68 | 57 | -26 | 1,2 | 0,8 | > 700 | 3,5 | > 700 |

. Ordre d'introduction : Ordre d'introduction des constituants de la composition bitume/polymère

B = Bitume ; P = copolymère bloc ; R = agent de couplage (soufre) ;

AP = acide polyphosphorique ; AS = acide sulfurique

. σ(r) exprimée en $daN/cm^2$

Au vu des caractéristiques rassemblées dans le tableau, il apparaît que :

- les compositions bitume/polymère obtenues après traitement par l'adjuvant acide ont des propriétés, notamment une susceptibilité thermique évaluée par l'indice de PFEIFFER, nettement améliorées par rapport à celles des compositions bitume/polymère correspondantes non traitées par l'adjuvant acide ;
- l'utilisation d'un adjuvant acide du type acide polyphosphorique conduit à l'obtention de compositions bitume/polymère non diluées ou diluées, à large intervalle de plasticité, ayant des caractéristiques physicomécaniques comparables à celles des compositions bitume/polymère non diluées ou diluées correspondantes produites en utilisant $H_2SO_4$ comme adjuvant acide ;
- l'utilisation d'un adjuvant acide résultant de l'association d'un acide polyphosphorique et d'acide sulfurique, soit prémélangés ou ajoutés successivement au milieu réactionel, est plus efficace en termes de propriétés physicomécaniques des compositions bitume/polymère produites, et ce à teneur totale plus faible, que l'acide polyphosphorique ou l'acide sulfurique utilisés seuls.

## Revendications

1. Procédé de préparation de compositions bitume/polymère à caractère multigrade renforcé, dans lequel on met en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,5 % à 20 % d'un élastomère réticulable au soufre et un agent de couplage donneur de soufre en quantité propre à fournir une quantité de soufre libre représentant 0,1 % à 20 % du poids de l'élastomère réticulable au soufre dans le milieu réactionnel formé des ingrédients bitume ou mélange de bitumes, élastomère et agent de couplage, pour produire une composition réticulée au soufre, puis on incorpore 0,005 % à 5 %, en poids du bitume ou mélange de bitumes, d'un adjuvant acide au milieu réactionnel résultant de la réticulation au soufre et maintenu à une température comprise entre 100°C et 230°C et sous agitation et l'on maintient le milieu réactionnel renfermant l'adjuvant acide à la température comprise entre 100°C et 230°C et sous agitation pendant une durée d'au moins 10 minutes, ledit procédé se caractérisant en ce que l'adjuvant acide est choisi parmi les acides polyphosphoriques, les acides de formule $R\text{-}(COO)_t\text{-}SO_3H$, où t est 0 ou 1 et R est un radical monovalent hydrocarbyle en $C_1$ à $C_{12}$, les mélanges d'au moins un acide polyphosphorique et d'acide sulfurique, les mélanges d'au moins un acide polyphosphorique et d'au moins l'un desdits acides $R\text{-}(COO)_t\text{-}SO_3H$, les mélanges d'acide sulfurique et d'au moins l'un des acides $R\text{-}(COO)_t\text{-}SO_3H$ et les mélanges d'acide sulfurique avec au moins un acide polyphosphorique et au moins l'un des acides $R\text{-}(COO)_t\text{-}SO_3H$.

2. Procédé selon la revendication 1, **caractérisé en ce que** l'adjuvant acide consiste en l'association, en poids, de 5 % à 100 % et plus particulièrement de 20 % à 100 % d'un ou plusieurs acides polyphosphoriques et de 95 % à 0 % et plus particulièrement de 80 % à 0 % d'au moins un composé choisi dans le groupe formé de l'acide sulfurique et desdits acides $R\text{-}(COO)_t\text{-}SO_3H$.

3. Procédé selon la revendication 1 ou 2, **caractérisé en ce que** l'adjuvant acide consiste en l'association, en poids, de 20 % à 95 % et plus particulièrement de 40 % à 90 % d'un ou plusieurs acides polyphosphoriques et de 80 % à 5 % et plus particulièrement de 60 % a à 10 % d'acide sulfurique et/ou d'acide méthane sulfonique.

4. Procédé selon l'une des revendications 1 à 3, **caractérisé en ce que** les acides polyphosphoriques sont des composés de formule $P_qH_rO_s$, dans laquelle q, r et s sont des nombres positifs tels que q ≥ 2, notamment allant de 3 à 20, et que 5q+r-2s=0, lesdits acides polyphosphoriques ayant en particulier la formule

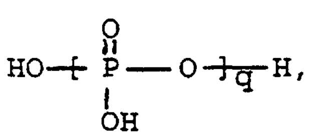

q ayant la signification ci-dessus.

5. Procédé selon la revendication 1, 2 ou 4, **caractérisé en ce que** les acides $R\text{-}(COO)_t\text{-}SO_3H$ sont tels que R est un radical alkyle, linéaire ou ramifié, en $C_1$ à $C_{12}$ et plus spécialement en $C_1$ à $C_8$, un radical cycloalkyle en $C_4$ à

$C_{12}$ et plus particulièrement en $C_6$ à $C_8$ ou un radical aromatique monovalent en $C_6$ à $C_{12}$ et plus spécialement en $C_6$ à $C_8$.

**6.** Procédé selon l'une des revendications 1 à 5, **caractérisé en ce que** la quantité totale d'adjuvant acide incorporée au milieu réactionnel résultant de la réticulation au soufre, représente 0,01 % à 2,5 % en poids du bitume ou mélange de bitumes.

**7.** Procédé selon l'une des revendications 1 à 6, **caractérisé en ce que** le bitume ou mélange de bitumes possède une viscosité cinématique à 100°C comprise entre 0,5 x $10^{-4}$ $m^2$/s et 3 x $10^{-2}$ $m^2$/s et de préférence entre 1 x $10^{-4}$ $m^2$/s et 2 x $10^{-2}$ $m^2$/s.

**8.** Procédé selon la revendication 7, **caractérisé en ce que** le bitume ou mélange de bitumes présente une pénétrabilité, définie suivant la norme NF T 66 004, comprise entre 5 et 800 et de préférence entre 10 et 400.

**9.** Procédé selon l'une des revendications 1 à 8, **caractérisé en ce que** l'élastomère réticulable au soufre est choisi parmi les copolymères statistiques ou séquencés de styrène et d'un diène conjugué, ledit diène étant en particulier tel que butadiène, isoprène, chloroprène, butadiène carboxylé et isoprène carboxylé.

**10.** Procédé selon la revendication 9, **caractérisé en ce que** le copolymère de styrène et de diène conjugué renferme, en poids, 5 à 50 % de styrène.

**11.** Procédé selon la revendication 9 ou 10, **caractérisé en ce que** la masse moléculaire moyenne en poids du copolymère de styrène et de diène conjugué est comprise entre 10 000 et 600 000 daltons et de préférence entre 30 000 et 400 000 daltons.

**12.** Procédé selon l'une des revendications 1 à 11, **caractérisé en ce que** la quantité d'élastomère réticulable au soufre utilisée représente 0,7 % à 15 % du poids du bitume ou mélange de bitumes.

**13.** Procédé selon l'une des revendications 1 à 12, **caractérisé en ce que** la quantité d'agent de couplage donneur de soufre est choisie pour fournir une quantité de soufre libre représentant 0,5 % à 10 % du poids de l'élastomère réticulable au soufre.

**14.** Procédé selon l'une des revendications 1 à 13, **caractérisé en ce que** l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

**15.** Procédé selon la revendication 14, **caractérisé en ce que** l'agent de couplage donneur de soufre est choisi parmi les produits M, qui renferment, en poids, de 0 % à 100 % d'une composante A consistant en un ou plusieurs accélérateurs de vulcanisation donneurs de soufre et de 100 % à 0 % d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

**16.** Procédé selon l'une des revendications 1 à 15, **caractérisé en ce que** sa mise en oeuvre consiste à :

- mettre en contact l'élastomère réticulable au soufre avec le bitume ou mélange de bitumes, en opérant à des températures comprises entre 100°C et 230°C, plus particulièrement entre 120°C et 190°C, et sous agitation, pendant une durée suffisante, de l'ordre de quelques dizaines de minutes à quelques heures et, par exemple de l'ordre de 1 heure à 8 heures, pour former un mélange homogène, puis
- incorporer au dit mélange l'agent de couplage donneur de soufre et maintenir le tout sous agitation à des températures comprises entre 100°C et 230°C, plus particulièrement entre 120°C et 190°C, et identiques ou non aux températures de mélange de l'élastomère avec le bitume ou mélange de bitumes, pendant une durée au moins égale à 10 minutes, notamment allant de 10 minutes à 5 heures et plus particulièrement de 30 minutes à 180 minutes, pour former un produit de réaction constituant une composition bitume/polymère réticulée, et enfin
- incorporer la quantité désirée d'adjuvant acide au dit produit de réaction, maintenu à une température comprise

entre 100°C et 230°C, plus particulièrement entre 120°C et 190°C, et sous agitation et maintenir le milieu réactionnel renfermant l'adjuvant acide à la température comprise entre 100°C et 230°C, plus particulièrement entre 120°C et 190°C, et sous agitation pendant une durée allant de 10 minutes à 5 heures, plus particulièrement de 30 minutes à 4 heures, pour former la composition bitume/polymère à intervalle de plasticité élargi.

**17.** Procédé selon l'une des revendications 1 à 16, **caractérisé en ce que** le mélange réactionnel formé du bitume ou mélange de bitumes, de l'élastomère réticulable au soufre et de l'agent de couplage donneur de soufre, conduisant à la composition bitume/polymère réticulée que l'on soumet ensuite à l'action de l'adjuvant acide, est additionné, à un moment quelconque de sa constitution, de 1 % à 40 % et plus particulièrement de 2 % à 30 %, en poids du bitume ou mélange de bitumes, d'un agent fluxant.

**18.** Procédé selon la revendication 17, **caractérisé en ce que** ledit agent fluxant consiste en une huile hydrocarbonée présentant un intervalle de distillation à pression atmosphérique, déterminé selon la norme ASTM D 86-67, compris entre 100°C et 600°C et situé plus spécialement entre 150°C et 400°C.

**19.** Procédé selon la revendication 18, **caractérisé en ce que** l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

**20.** Procédé selon la revendication 18 ou 19, **caractérisé en ce que** l'élastomère réticulable au soufre et l'agent de couplage sont incorporés au bitume sous la forme d'une solution mère de ces produits dans l'huile hydrocarbonée.

**21.** Procédé selon la revendication 20, **caractérisé en ce que** la solution mère est préparée par mise en contact des ingrédients la composant, sous agitation, à des températures comprises entre 10°C et 170°C et de préférence entre 40°C et 120°C.

**22.** Procédé selon la revendication 20 ou 21, **caractérisé en ce que** la solution mère renferme, comptés en poids de l'huile hydrocarbonée, 5 % à 40 % et de préférence 10 % à 35 % d'élastomère réticulable au soufre et 0,02 % à 15 % et de préférence 0,1 % à 5 % d'agent de couplage donneur de soufre.

**23.** Procédé selon l'une des revendications 20 à 22,
**caractérisé en ce que** l'on met en contact, entre 100°C et 230°C et sous agitation, de 80 % à 95 % en poids de bitume ou mélange de bitumes avec 20 % à 5 % en poids de la solution mère, cette dernière renfermant, en poids de l'huile hydrocarbonée servant de solvant, 10 % à 35 % d'élastomère réticulable au soufre et 0,1 % à 5 % d'agent de couplage, puis on maintient le mélange ainsi obtenu sous agitation entre 100°C et 200°C, pendant une durée au moins égale à 10 minutes et de préférence allant de 10 minutes à 60 minutes pour former la composition bitume/polymère réticulée, que l'on soumet ensuite à l'action de l'adjuvant acide.

**24.** Application des compositions bitume/polymère obtenues par le procédé selon l'une des revendications 1 à 23, à la production de liants bitume/polymère, lesdits liants consistant en lesdites compositions utilisées telles quelles ou bien étant formés par dilution desdites compositions par un bitume ou mélange de bitumes ou par une composition bitume/polymère selon l'une des revendications 1 à 23 à teneur plus faible en élastomère réticulé, lesquels liants bitume/polymère sont notamment utilisables, directement ou après mise en émulsion aqueuse, à la réalisation de revêtements, notamment revêtements routiers du type enduit superficiel, à la production d'enrobés mis en place à chaud ou à froid, ou encore à la réalisation de revêtements d'étanchéité.

**Claims**

**1.** A process for the production of multigrade reinforced bitumen/polymer compositions, in which process, at temperatures of between 100°C and 230°C and with stirring, a bitumen or mixture of bitumens is contacted for a period of at least 10 minutes with 0.5% to 20%, relative to the weight of bitumen or mixture of bitumens, of a sulfur-crosslinkable elastomer and a sulfur-donating coupling agent in a quantity such as to provide a quantity of free sulfur amounting to 0.1% to 20% of the weight of the sulfur-crosslinkable elastomer in the reaction medium comprising the ingredients bitumen or mixture of bitumens, elastomer and coupling agent, in order to produce a sulfur-crosslinked composition, then 0.005% to 5%, relative to the weight of the bitumen or mixture of bitumens, of an acidic additive is incorporated into the reaction medium arising from the sulfur crosslinking which is maintained at

a temperature of between 100°C and 230°C with stirring, and the reaction medium containing the acidic additive is maintained at the temperature of between 100°C and 230°C with stirring for a period of at least 10 minutes, said process being **characterised in that** the acidic additive is selected from among polyphosphoric acids, acids of the formula $R\text{-}(COO)_t\text{-}SO_3H$, in which t is 0 or 1 and R is a monovalent $C_1$ to $C_{12}$ hydrocarbyl radical, mixtures of at least one polyphosphoric acid and at least one of said acids $R\text{-}(COO)_t\text{-}SO_3H$, mixtures of sulfuric acid and at least one of the acids $R\text{-}(COO)_t\text{-}SO_3H$ and mixtures of sulfuric acid with at least one polyphosphoric acid and at least one of the acids $R\text{-}(COO)_t\text{-}SO_3H$.

**2.** A process according to claim 1, **characterised in that** the acidic additive consists of the combination, by weight, of 5% to 100% and more particularly of 20% to 100% of one or more polyphosphoric acids and of 95% to 0% and more particularly of 80% to 0% of at least one compound selected from the group comprising sulfuric acid and said acids $R\text{-}(COO)_t\text{-}SO_3H$,

**3.** A process according to claim 1 or 2, **characterised in that** the acidic additive consists of the combination, by weight, of 20% to 95% and more particularly of 40 to 90% of one or more polyphosphoric acids and of 80% to 5% and more particularly of 60% to 10% of sulfuric acid and/or methanesulfonic acid.

**4.** A process according to one of claims 1 to 3, **characterised in that** the polyphosphoric acids are compounds of the formula $P_qH_rO_s$, in which q, r and s are positive numbers such that $q \geq 2$, in particular ranging from 3 to 20, and that $5q+r-2s=0$, said polyphosphoric acids in particular being of the formula

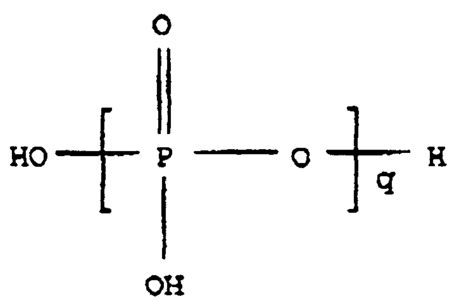

,

q having the above-stated meaning.

**5.** A process according to claim 1, 2 or 4, **characterised in that** the acids $R\text{-}(COO)_t\text{-}SO_3H$ are such that R is a linear or branched $C_1$ to $C_{12}$, and more specifically $C_1$ to $C_8$ alkyl radical, a $C_4$ to $C_{12}$ and more particularly $C_6$ to $C_8$ cycloalkyl radical or a monovalent $C_6$ to $C_{12}$ and more specifically $C_6$ to $C_8$ aromatic radical.

**6.** A process according to one of claims 1 to 5, **characterised in that** the total quantity of acidic additive incorporated into the reaction medium arising from sulfur crosslinking amounts to 0.01% to 2.5% relative to the weight of bitumen or mixture of bitumens.

**7.** A process according to one of claims 1 to 6, **characterised in that** the bitumen or mixture of bitumens has a kinematic viscosity at 100°C of between $0.5 \times 10^{-4}$ $m^2/s$ and $3 \times 10^{-2}$ $m^2/s$ and preferably of between $1 \times 10^{-4}$ $m^2/s$ and $2 \times 10^{-2}$ $m^2/s$.

**8.** A process according to claim 7, **characterised in that** the bitumen or mixture of bitumens exhibits a penetrability, as defined in accordance with standard NF T 66 004, of between 5 and 800 and preferably of between 10 and 400.

**9.** A process according to one of claims 1 to 8, **characterised in that** the sulfur-crosslinkable elastomer is selected from among random or sequenced copolymers of styrene and a conjugated diene, said diene being in particular such as butadiene, isoprene, chloroprene, carboxylated butadiene and carboxylated isoprene.

**10.** A process according to claim 9, **characterised in that** the styrene and conjugated diene copolymer contains 5 to 50% by weight of styrene.

**11.** A process according to claim 9 or 10, **characterised in that** the weight average molecular weight of the copolymer

of styrene and conjugated diene is between 10,000 and 600,000 daltons and preferably between 30,000 and 400,000 daltons.

**12.** A process according to one of claims 1 to 11, **characterised in that** the quantity of sulfur-crosslinkable elastomer used amounts to 0.7% to 15% of the weight of bitumen or mixture of bitumens.

**13.** A process according to one of claims 1 to 12, **characterised in that** the quantity of sulfur-donating coupling agent is selected such as to provide a quantity of free sulfur amounting to 0.5% to 10% of the weight of the sulfur-crosslinkable elastomer.

**14.** A process according to one of claims 1 to 13, **characterised in that** the sulfur-donating coupling agent is selected from the group comprising elemental sulfur, hydrocarbyl polysulfides, sulfur-donating vulcanisation accelerators, mixtures of such products among themselves and/or with non-sulfur-donating vulcanisation accelerators.

**15.** A process according to claim 14, **characterised in that** sulfur-donating coupling agent is selected from among the products M which contain, by weight, from 0% to 100% of a component A consisting of one or more sulfur-donating vulcanisation accelerators and from 100% to 0% of a component B consisting of one or more vulcanisation accelerators selected from among elemental sulfur and hydrocarbyl polysulfides, and products N which contain a component C consisting of one or more non-sulfur-donating vulcanisation accelerators and a product M in a ratio by weight of component C to product M ranging from 0.01 to 1 and, preferably, from 0.05 to 0.5.

**16.** A process according to one of claims 1 to 15, **characterised in that** performance thereof consists in:

- contacting the sulfur-crosslinkable elastomer with the bitumen or mixture of bitumens at temperatures of between 100°C and 230°C, more particularly of between 120°C and 190°C, and with stirring for a sufficient time, of the order of some tens of minutes to several hours and, for example of the order of 1 hour to 8 hours, in order to form a homogeneous mixture, then
- incorporating into said mixture the sulfur-donating coupling agent and continuing to stir the entire composition at temperatures of between 100°C and 230°C, more particularly of between 120°C and 190°C, which temperatures may or may not be identical to the temperatures for mixing the elastomer with the bitumen or mixture of bitumens, for a period of at least 10 minutes, in particular ranging from 10 minutes to 5 hours and more particularly from 30 minutes to 180 minutes, in order to form a reaction product constituting a crosslinked bitumen/polymer composition, and finally
- incorporating the desired quantity of acidic additive into said reaction product, maintained at a temperature of between 100°C and 230°C, more particularly of between 120°C and 190°C with stirring, and maintaining the reaction medium containing the acidic additive at the temperature of between 100°C and 230°C, more particularly of between 120°C and 190°C, with stirring for a period ranging from 10 minutes to 5 hours, more particularly from 30 minutes to 4 hours, in order to form the bitumen/polymer composition with an extended plasticity range.

**17.** A process according to one of claims 1 to 16, **characterised in that** there is added to the reaction mixture formed from the bitumen or mixture of bitumens, the sulfur-crosslinkable elastomer and the sulfur-donating coupling agent, which gives rise to the crosslinked bitumen/polymer composition which is subjected to the action of the acidic additive, at any point during the preparation thereof, from 1% to 40% and more particularly from 2% to 30% of a fluxing agent, relative to the weight of the bitumen or mixture of bitumens.

**18.** A process according to claim 17, **characterised in that** said fluxing agent consists of a hydrocarbon oil exhibiting a distillation range at atmospheric pressure, determined in accordance with standard ASTM D 86-67, of between 100°C and 600°C and more specifically located between 150°C and 400°C.

**19.** A process according to claim 18, **characterised in that** the hydrocarbon oil is selected from among aromatic petroleum cuts, naphtheno-aromatic petroleum cuts, naphtheno-paraffinic petroleum cuts, paraffinic petroleum cuts, coal oils and vegetable oils.

**20.** A process according to claim 18 or 19, **characterised in that** the sulfur-crosslinkable elastomer and the coupling agent are incorporated into the bitumen in the form of a parent solution of these products in the hydrocarbon oil.

**21.** A process according to claim 20, **characterised in that** the parent solution is prepared by contacting the constituent

ingredients with stirring at temperatures of between 10°C and 170°C and preferably of between 40°C and 120°C.

**22.** A process according to claim 20 or 21, **characterised in that** the parent solution contains, by weight relative to the hydrocarbon oil, from 5% to 40% and preferably from 10% to 35% of sulfur-crosslinkable elastomer and from 0.02% to 15% and preferably from 0.1% to 5% of sulfur-donating coupling agent.

**23.** A process according to one of claims 20 to 22, **characterised in that**, at between 100°C and 230°C and with stirring, from 80% to 95% by weight of bitumen or mixture of bitumens are contacted with from 20% to 5% by weight of the parent solution, the latter containing, relative to the weight of the hydrocarbon oil acting as solvent, from 10% to 35% of sulfur-crosslinkable elastomer and from 0.1% to 5% of coupling agent, then the resultant mixture is stirred at between 100°C and 200°C for a period of at least 10 minutes and preferably ranging from 10 minutes to 60 minutes in order to form the crosslinked bitumen/polymer composition, which is then subjected to the action of the acidic additive.

**24.** Use of the bitumen/polymer compositions obtained by the process according to one of claims 1 to 23 in the production of bitumen/polymer binders, said binders consisting of said compositions used as such or alternatively formed by dilution of said compositions with a bitumen or mixture of bitumens or with a bitumen/polymer composition according to one of claims 1 to 23 with a lower crosslinked elastomer content, said bitumen/polymer binders in particular being usable, directly or after conversion into an aqueous emulsion, for the production of coatings, in particular road coatings of the surface dressing type, for the production of hot-laid or cold-laid bituminous paving mixes or alternatively for the production of sealing coats.

**Patentansprüche**

**1.** Verfahren zur Herstellung von verstärkten Mehrfachgrad-Bitumen/Polymer-Zusammensetzungen, in dem unter der Wirkung von Temperaturen zwischen einschließlich 100°C und 230°C und unter Bewegung während einer Dauer von mindestens 10 Minuten ein Bitumen oder ein Bitumengemisch mit, bezogen auf das Gewicht des Bitumens oder des Bitumengemisches, 0,5% bis 20% eines mit Schwefel vernetzbaren Elastomers und einem Schwefeldonor-Kopplungsmittel in einer Menge, die zur Lieferung einer freien Schwefelmenge, die 0,1% bis 20% des Gewichts des mit Schwefel vernetzbaren Elastomeren entspricht, im Reaktionsmedium, welches aus den Bestandteilen des Bitumens oder Bitumengemisches, des Elastomeren und des Kopplungsmittels gebildet wird, in Kontakt gebracht wird, um eine mit Schwefel vernetzte Zusammensetzung herzustellen, dann 0,005% bis 5%, bezogen auf das Gewicht des Bitumens oder des Bitumengemisches, eines Säuremittels in das Reaktionsmedium, welches aus der Vernetzung mit Schwefel resultiert und bei einer Temperatur von zwischen 100°C und 230°C und unter Bewegung gehalten wird, eingebracht werden, und daß das Säuremittel umfassende Reaktionsmedium bei einer Temperatur von zwischen einschließlich 100°C und 230°C und unter Bewegung während einer Dauer von mindestens 10 Minuten gehalten wird, wobei das Verfahren **dadurch gekennzeichnet ist, daß** das Säuremittel ausgewählt wird unter Polyphosophorsäuren, Säuren der Formel $R-(COO)_t-SO_3H$, wobei t 0 oder 1 ist und R ein monovalentes $C_1$-$C_{12}$-Kohlenwasserstoffradikal ist, schungen aus mindestens einer Polyphosphorsäure und Schwefelsäure, Mischungen aus mindestens einer Polyphosphorsäure und mindestens einer der besagten Säuren $R-(COO)_t-SO_3H$, Mischungen aus Schwefelsäure und mindestens einer der Säuren $R-(COO)_t-SO_3H$, und Mischungen aus Schwefelsäure mit mindestens einer Polyphosphorsäure und mindestens einer der Säuren $R-(COO)_t-SO_3H$.

**2.** Verfahren gemäß Anspruch 1, **dadurch gekennzeichnet, daß** das Säuremittel besteht aus dem Zusammenbringen von, in Gewicht, 5% bis 100% und insbesondere von 20% bis 100% einer oder mehrerer Polyphosphorsäuren und von 95% bis 0% und insbesondere von 80% bis 0% mindestens einer Zusammensetzung, die aus der Gruppe ausgewählt wurde, die durch Schwefelsäure und den besagten Säuren $R-(COO)_t-SO_3H$ gebildet ist.

**3.** Verfahren gemäß Anspruch 1 oder 2, **dadurch gekennzeichnet, daß** das Säuremittel besteht aus dem Zusammenbringen, in Gewicht, von 20% bis 95% und insbesondere von 40% bis 90% einer oder mehrerer Polyphosphorsäuren und von 80% bis 5% und insbesondere von 60% bis 10% Schwefelsäure und/oder Methansulfonsäure.

**4.** Verfahren gemäß einem der Ansprüche 1 bis 3, **dadurch gekennzeichnet, daß** die Polyphosphorsäuren zusammengesetzt sind aus der Formel $P_qH_rO_s$, in welcher q, r und s positive Zahlen bedeuten wie $q \geq 2$, insbesondere von 3 bis 20 laufend, und wobei $5q+r-2s=0$, wobei die Polyphosphorsäuren insbesondere die Formel

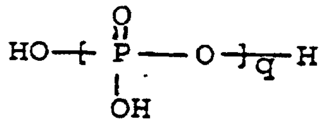

besitzen, wobei q die obige Bedeutung aufweist.

**5.** Verfahren gemäß Anspruch 1, 2 oder 4, **dadurch gekennzeichnet, daß** die Säuren R-$(COO)_t$-$SO_3H$ derart sind, daß R ein lineares oder verzweigtes Alkylradikal mit $C_1$ bis $C_{12}$ und insbesondere mit $C_1$ bis $C_8$, ein Cycloalkylradikal mit $C_4$ bis $C_{12}$ und insbesondere mit $C_6$ bis $C_8$ oder ein monovalentes aromatisches Radikal mit $C_6$ bis $C_{12}$ und insbesondere mit $C_6$ bis $C_8$ ist.

**6.** Verfahren gemäß einem der Ansprüche 1 bis 5, **dadurch gekennzeichnet, daß** die Gesamtmenge des Säuremittels, die in das sich aus der Vernetzung mit Schwefel ergebende Reaktionsmedium eingebracht wird, 0,01 bis 2,5 Gew.-% des Bitumens oder des Bitumengemisches entspricht.

**7.** Verfahren gemäß einem der Ansprüche 1 bis 6, **dadurch gekennzeichnet, daß** das Bitumen oder das Bitumengemisch eine kinematische Viskosität bei 100°C von zwischen einschließlich 0,5 x $10^{-4}$ $m^2/s$ und 3 x $10^{-2}/s$ und vorzugsweise zwischen 1 x $10^{-4}$ $m^2/s$ und 2 x $10^{-2}$ $m^2/s$ besitzt.

**8.** Verfahren gemäß Anspruch 7, **dadurch gekennzeichnet, daß** das Bitumen oder das Bitumengemisch eine gemäß der Norm NF T 66 004 bestimmte Durchdringbarkeit von zwischen einschließlich 5 und 800 und vorzugsweise zwischen 10 und 400 zeigt.

**9.** Verfahren gemäß einem der Ansprüche 1 bis 8, **dadurch gekennzeichnet, daß** das mit Schwefel vernetzbare Elastomer ausgewählt wird unter statistischen oder geordneten Copolymeren von Styrol und einem konjugierten Dien, wobei das Dien insbesondere Butadien, Isopren, Chloropren, carboxyliertes Butadien und carboxyliertes Isopren ist.

**10.** Verfahren gemäß Anspruch 9, **dadurch gekennzeichnet, daß** das Copolymer aus Styrol und konjugiertem Dien 5 bis 50 Gew.-% Styrol umfaßt.

**11.** Verfahren gemäß Anspruch 9 oder 10, **dadurch gekennzeichnet, daß** das gewichtsgemittelte Molekulargewicht des Copolymeren aus Styrol und konjugiertem Dien zwischen einschließlich 10.000 und 600.000 Dalton und vorzugsweise zwischen 30.000 und 400.000 Dalton liegt.

**12.** Verfahren gemäß einem der Ansprüche 1 bis 11, **dadurch gekennzeichnet, daß** die Menge des verwendeten, mit Schwefel vernetzbaren Elastomeren 0,7 bis 15 Gew.-% des Bitumens oder Bitumengemisches entspricht.

**13.** Verfahren gemäß einem der Ansprüche 1 bis 12, **dadurch gekennzeichnet, daß** die Menge des Schwefeldonor-Kopplungsmittels gewählt wird, um eine freie Schwefelmenge entsprechend 0,5% bis 10% des Gewichts des mit Schwefel vernetzbaren Elastomeren liefert.

**14.** Verfahren gemäß einem der Ansprüche 1 bis 13, **dadurch gekennzeichnet, daß** das Schwefeldonor-Kopplungsmittel aus der Gruppe ausgewählt wird, die durch elementaren Schwefel, polysulfierten Kohlenwasserstoffen, Schwefeldonor-Vulkanisationsbeschleunigern, den Mischungen dieser Produkte untereinander und/oder mit Nichtschwefeldonor-Vulkanisationsbeschleunigern gebildet wird.

**15.** Verfahren gemäß Anspruch 14, **dadurch gekennzeichnet, daß** das Schwefeldonor-Kopplungsmittel unter den Produkten M, die, in Gewicht, 0% bis 100% einer Komponente A, bestehend aus einem oder mehreren Schwefeldonor-Vulkanisationsbeschleunigern, und 100% bis 0% einer Komponente B, bestehend aus einem oder mehreren Vulkanisationsmitteln, die unter elementarem Schwefel und polysulfierten Kohlenwasserstoffen ausgewählt werden, umfassen, sowie den Produkten N, die eine Komponente C, bestehend aus einem oder mehreren Nichtschwefeldonor-Vulkanisationsbeschleunigern, und ein Produkt M mit einem Gewichtsverhältnis der Komponente C im Produkt M, welches von 0,01 bis 1 und vorzugsweise von 0,05 bis 0,5 reicht, umfassen, ausgewählt wird.

**16.** Verfahren gemäß einem der Ansprüche 1 bis 15, **dadurch gekennzeichnet, daß** dessen Durchführung besteht

aus:

- Inkontaktbringen des mit Schwefel vernetzbaren Elastomeren mit dem Bitumen oder dem Bitumengemisch bei Temperaturen von zwischen einschließlich 100°C und 230°C, insbesondere zwischen 120°C und 190°C, und unter Bewegung während einer ausreichenden Dauer in der Größenordnung von einigen zig Minuten bis mehreren Stunden und beispielsweise in der Größenordnung von 1 Stunde bis 8 Stunden, um eine homogene Mischung zu bilden, dann
- Einführen des Schwefeldonor-Kopplungsmittels in diese Mischung und Halten des Ganzen unter Bewegung bei Temperaturen von zwischen einschließlich 100°C und 230°C, insbesondere zwischen 120°C und 190°C, und bei identischen oder nicht-identischen Temperaturen der Mischung des Elastomers mit dem Bitumen oder dem Bitumengemisch während einer Dauer von mindestens 10 Minuten, insbesondere von 10 Minuten bis 5 Stunden und vor allem von 30 Minuten bis 180 Minuten laufend, um ein Reaktionsprodükt zu bilden, welches sich aus einer Bitumen/Polymernetzwerk-Zusammensetzung aufbaut, und schließlich
- Einbringen der gewünschten Menge des Säuremittels in das besagte Reaktionsprodukt, welches auf einer Temperatur von zwischen einschließlich 100°C und 230°C, insbesondere zwischen 120°C und 190°C und unter Bewegung gehalten wurde, und Halten des das Säuremittel umfassenden Reaktionsmediums auf die Temperatur von zwischen einschließlich 100°C und 230°C, insbesondere zwischen 120°C und 190°C und unter Bewegung während einer Dauer, die von 10 Minuten bis 5 Stunden, insbesondere von 30 Minuten bis 4 Stunden reicht, um die Bitumen/Polymer-Zusammensetzungen mit vergrößertem Plastizitätsintervall zu bilden.

**17.** Verfahren gemäß einem der Ansprüche 1 bis 16, **dadurch gekennzeichnet, daß** die Reaktionsmischung, die aus dem Bitumen oder der Bitumenmischung, dem mit Schwefel vernetzbaren Elastomeren und dem Schwefeldonor-Kopplungsmittel gebildet ist, zu der Bitumen/Polymernetzwerk-Zusammensetzung führt, indem die Wirkung des Säuremittels und zusätzlich bei irgendeinem Moment ihrer Beschaffenheit 1 bis 40 und insbesondere 2 bis 30, bezogen auf das Gewicht des Bitumens oder der Bitumenmischung, eines Verdünnungsmittels darauf einwirken gelassen wird.

**18.** Verfahren gemäß Anspruch 17, **dadurch gekennzeichnet, daß** das Verdünnungsmittel sich aus einem Kohlenwasserstofföl zusammensetzt, welches einen Destillationsintervall bei Atmosphärendruck, bestimmt gemäß der Norm ASTM D 86-67, von zwischen einschließlich 100°C und 600°C und insbesondere zwischen 150°C und 400°C zeigt.

**19.** Verfahren gemäß Anspruch 18, **dadurch gekennzeichnet, daß** das Kohlenwasserstofföl unter Erdölmischungen aromatischen Typs, Erdölmischungen Naphthen-armomatischen Typs, Erdölmischungen Naphthen-paraffinischen Typs, Erdölmischungen paraffinischen Typs, Kohleölen und aus Pflanzen stammenden Ölen ausgewählt wird.

**20.** Verfahren gemäß Anspruch 18 oder 19, **dadurch gekennzeichnet, daß** das mit Schwefel vernetzbare Elastomer und das Kopplungsmittel in den Bitumen in Form einer Mutterlösung dieser Produkte im Kohlenwasserstofföl eingebracht wird.

**21.** Verfahren gemäß Anspruch 20, **dadurch gekennzeichnet, daß** die Mutterlösung hergestellt wird, indem ihre Bestandteile unter Bewegung bei Temperaturen von zwischen einschließlich 10°C und 170°C und vorzugsweise zwischen 40°C und 120°C in Kontakt gebracht werden.

**22.** Verfahren gemäß Anspruch 20 oder 21, **dadurch gekennzeichnet, daß** die Mutterlösung, bezogen auf das Gewicht des Kohlenwasserstofföls, 5% bis 40% und vorzugsweise 10% bis 35% des mit Schwefel vernetzbaren Elastomeren und 0,02% bis 15% und vorzugsweise 0,1% bis 5% des Schwefeldonor-Kopplungsmittels umfaßt.

**23.** Verfahren gemäß einem der Ansprüche 20 bis 22, **dadurch gekennzeichnet, daß** 80 bis 95 Gew.-% des Bitumens oder der Bitumenmischung mit 20 bis 5 Gew.-% der Mutterlösung in Kontakt gebracht werden, wobei letztgenannte, bezogen auf das Gewicht des als Lösungsmittel dienenden Kohlenwasserstofföls, 10 bis 35% des mit Schwefel vernetzbaren Elastomeren und 0,1 bis 5% des Kopplungsmittels umfaßt, dann die so erhaltene Mischung unter Bewegung zwischen 100°C und 200°C während einer Dauer, die mindestens 10 Minuten und vorzugsweise 10 Minuten bis 60 Minuten läuft, gehalten wird, um die Bitumen/Polymernetzwerk-Zusammensetzung zu bilden, damit die Wirkung des Säuremittels darauf wirken gelassen wird.

**24.** Verwendung der durch das Verfahren gemäß einem der Ansprüche 1 bis 23 erhaltenen Bitumen/Polymer-Zusammensetzungen für die Herstellung von Bitumen/Polymer-Bindemitteln, wobei die Bindemittel aus den besagten Zusammensetzungen so, wie sie verwendet werden, bestehen oder gleichwohl mittels Verdünnung der besagten Zusammensetzungen durch einen Bitumen oder einer Mischung von Bitumenarten oder durch eine Bitumen/Polymer-Zusammensetzung gemäß einem der Ansprüche 1 bis 23 bei einem niedrigeren Gehalt des vernetzten Polymeren gebildet wurden, wobei die Bitumen/Polymer-Bindemittel insbesondere - direkt oder in wässrige Emulsion gebracht - zur Gewinnung von Beschichtungen, insbesondere Straßenbeschichtungen vom Typ einer Oberflächenlage, zur Herstellung von in Wärme oder in Kälte angebrachten Umhüllungen oder Mischgütern, oder noch zur Herstellung von dichten Beschichtungen.